# EUROPÄISCHE PATENTANMELDUNG

(11) **EP 1 126 140 A2**
(43) Veröffentlichungstag der Anmeldung: **22.08.2001**
(21) Anmeldenummer: 01101155.8
(22) Anmeldetag: 23.01.2001
(51) Int. Cl.: F01N 7/18

(54) **Elastische Aufhängung, vorzugsweise für eine Abgasanlage**

(30) Priorität: 17.02.2000 DE 10007051
(71) Anmelder: Volkswagen Aktiengesellschaft, 38436 Wolfsburg (DE)
(72) Erfinder: Hoppe, Peter, 38518 Gifhorn (DE); Graumann, Heinz, Dipl.-Ing., 38444 Wolfsburg (DE); Fritsche, Thomas, Dipl.-Ing., 38226 Salzgitter (DE)

(57) **Zusammenfassung**

Die Erfindung betrifft elastische Aufhängungen, vorzugsweise zum Befestigen der Abgasanlagen von Kraftfahrzeugen am Fahrzeugboden, wobei besonders im kritischen, akustisch hörbaren Frequenzbereich eine Übertragung von Schwingungen der Abgasanlage auf die Karosserie weitgehend verhindert und gleichzeitig die Eigenschwingungen der Aufhängung selbst gedämpft werden sollen.
Die elastische Aufhängung (1) besteht aus einem Grundkörper (2) aus elastischem Material, in den von dessen Zentrum (Z) ausgehend, zu Ober- und Unterseite (OS; US) hin versetzte Aufnahmeöffnungen (3; 4) für Elemente zur Verbindung mit der Karosserie bzw. Abgasanlage eingebracht sind. Der Grundkörper (2) weist eine zentrale Ausnehmung (7) sowie zwischen den Aufnahmeöffnungen (3; 4) angeordnete Zusatzmassen (5) auf. Die Zusatzmassen (5) erstrecken sich außerhalb des Grundkörpers (2) längs dieser Ausnehmung (7). An den Zusatzmassen (5) angeordnete Verankerungen (6), die sich in den Außenseiten (8) beidseitig des Grundkörpers (2) in Richtung des Zentrums Z der zentralen Ausnehmung (7) abstützen, sind im Grundkörper (2) verankert.

## Beschreibung

Die Erfindung betrifft elastische Aufhängungen, vorzugsweise für Abgasanlagen von Kraftfahrzeugen, gemäß dem Oberbegriff von Haupt- und Nebenanspruch.

Abgasanlagen an Kraftfahrzeugen sind besonderen Belastungen durch auf sie einwirkende Kräfte ausgesetzt. Durch Schwingungen des Fahrzeuges und Eigenschwingungen des Motors hervorgerufene Kräfte wirken auf die Abgasanlage ein. Die Aufhängung bildet die mechanische Verbindung zwischen Karosserie und Abgasanlage. Damit wird die Abgasanlage mechanisch am Fahrzeugboden befestigt, wobei besonders im kritischen, akustisch hörbaren Frequenzbereich eine Übertragung von Schwingungen der Abgasanlage auf die Karosserie weitgehend verhindert werden soll.

Vorbekannt ist aus der Schrift DE 44 39 631 A1 eine elastische Aufhängung für Abgasanlagen. Innerhalb eines Elastomerteils mit geschlossener Außenkontur sind einstückig, zwei sich gegenüberliegende Aufnahmen ausgeformt, in welche von einem Fahrzeugboden bzw. einer Abgasanlage ausgehende Befestigungsmittel eingreifen. Innerhalb eines Verbindungsabschnittes zwischen beiden Aufnahmen ist eine Zusatzmasse im Elastomerteil angeordnet. Das Elastomerteil bildet als Einheit mit der Masse ein Feder -Masse- System.

Weiterhin vorbekannt ist aus der Schrift DE 195 26 629 C1 eine elastische Aufhängung für Abgasanlagen, deren aus einem elastischen Material bestehender, im wesentlichen ovaler Grundkörper zwei sich gegenüberliegende Aufnahmen für Elemente von Karosserie bzw. Abgasanlage aufweist. Zwischen den beiden Aufnahmen ist eine Ausnehmung eingebracht, innerhalb derer ein Formkörper von zwei mit dem Grundkörper verbundenen Stegen gehalten wird. Der Formkörper dient als Zug- und Druckanschlag für den Grundkörper. In sich beidseitig der Ausnehmung erstreckende Außenstege sind Zusatzmassen eingeschlossen, welche, zusammen mit der Elastizität des Grundkörpers, die Eigenfrequenz der Aufhängung beeinflussen. Ein gezieltes Abstimmen der Elastizität des Grundkörpers und der eingebrachten Zusatzmassen ermöglicht es, Schwingungen in speziellen Frequenzbereichen aktiv zu tilgen.

Die vorbeschriebenen Aufhängungen sollen durch geeignete Auswahl der Zusatzmassen und der Steifigkeit des Elastomers eine gewünschte Eigenfrequenz der Aufhängung erreichen. Die von der Abgasanlage auf den Fahrzeuginnenraum einwirkenden Schwingungen sollen, mittels der speziell abgestimmten elastischen Aufhängung, aktiv getilgt werden. Nachteilig ist hierbei, daß die Aufhängungen nur auf spezielle Frequenzbereiche abgestimmt werden können. Durch die eingebrachten Zusatzmassen wird die Eigenfrequenz der Aufhängung lediglich verschoben. Weiterhin ist die Abstimmung der Aufhängung als aktiver Tilger kompliziert, da das Elastomer einerseits als Feder für das gesamte Feder-Masse-System - Abgasanlage - Aufhängung - und andererseits gleichzeitig als Feder für den Tilger - Elastomerteil mit eingebrachter Masse - wirkt.

Aufgabe der Erfindung ist es, eine elastische Aufhängung für eine Abgasanlage zu schaffen, welche eine gute Dämpfung der von der Abgasanlage in das Fahrzeug eingeleiteten Schwingungen gewährleistet und gleichzeitig Eigenschwingungen der Aufhängung selbst dämpft.

Diese Aufgabe wird bei gattungsgemäßen elastischen Aufhängungen erfindungsgemäß durch die kennzeichnenden Merkmale der Patentansprüche 1 bzw. 2 gelöst.

Erfindungsgemäß weist die Aufhängung eine zentrale Ausnehmung und dezentral dazu angeordnete Zusatzmassen auf, was ein an die Belastung angepaßtes Elastizitäts- und Dämpfungsverhalten der Aufhängung ergibt. Das gezielte Verformen der Aufhängung wird durch die Kombination der entfernt vom Schwerpunkt der Aufhängung angeordneten Zusatzmassen, der Gestaltung ihrer Verankerungen und der Form des Grundkörpers der Aufhängung erreicht.

Von der Abgasanlage verursachte Schwingungen werden durch die elastische Aufhängung von der Karosserie entkoppelt, da die in die Außenseiten eingebrachten Zusatzmassen, zusätzlich zur Dämpfung des elastischen Materials, den Grundkörper entgegen von dessen Belastungsrichtung verformen und damit den angreifenden Kräften entgegenwirken.

Weitere Einzelheiten der Erfindung werden in der Zeichnung anhand von schematisch dargestellten Ausführungsbeispielen beschrieben.

Hierbei zeigt:
Figur 1 eine Prinzipdarstellung der erfindungsgemäßen elastischen Aufhängung mit außerhalb des Grundkörpers liegenden Zusatzmassen,
Figur 2 eine Prinzipdarstellung der erfindungsgemäßen elastischen Aufhängung mit in den Grundkörper eingeschlossenen Zusatzmassen.

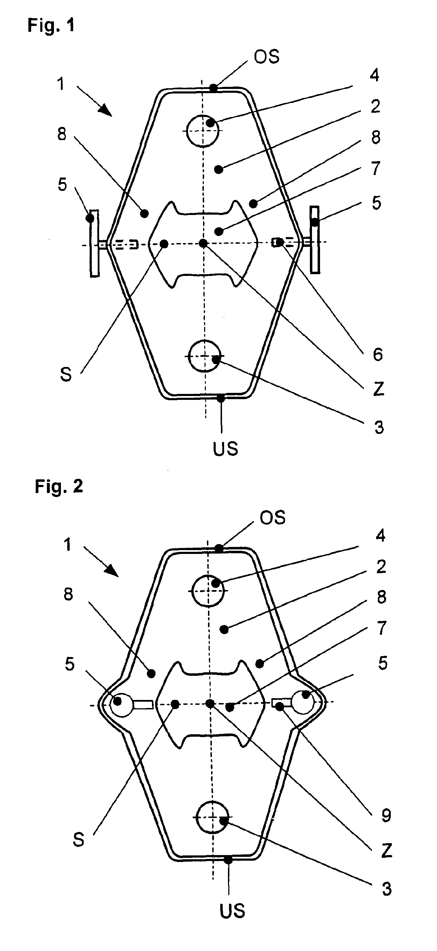

In Fig. 1 ist eine mögliche Ausführung der erfindungsgemäßen elastischen Aufhängung 1 gezeigt, deren Grundkörper 2 aus einem elastischen Material besteht und eine sechseckige Grundfläche aufweist. In den Grundkörper 2 sind Aufnahmeöffnungen 3; 4 für die Karosserie und die Abgasanlage -beide nicht dargestellt- eingebracht, die jeweils in Richtung der Ober- und Unterseite OS;US des Grundkörpers 2, vom Flächenschwerpunkt dessen Grundfläche (Zentrum Z) versetzt angeordnet sind. Zwischen den beiden Aufnahmeöffnungen 3; 4 ist, zentral im Zentrum Z der Grundfläche des Grundkörpers 2, eine im wesentlichen doppelt - T - förmige Ausnehmung 7 eingebracht, wobei der Verbindungssteg der von der Ausnehmung 7 gebildeten Kontur, auf einer Symmetrieachse S zwischen den Aufnahmeöffnungen 3; 4 liegt. An zwei sich beidseitig der Ausnehmung 7 erstreckenden Außenseiten 8 des Grundkörpers 2 sind Zusatzmassen 5 angeordnet, die sich mittels ihrer Verankerungen 6 in den Außenstegen 8 des Grundkörpers 2 abstützen. Die Zusatzmassen 5 liegen im wesentlichen außerhalb des Grundkörpers 2 der elastischen Aufhängung 1.

Fig. 2 zeigt eine weitere Ausführung der erfindungsgemäßen elastischen Aufhängung 1. Der Aufbau dieser Ausführung entspricht im wesentlichen dem in Fig. 1 gezeigten. Markant unterschiedlich ist, daß die über die Verankerungen 6 innerhalb des Grundkörpers 2 abgestützten Zusatzmassen 5 komplett vom Grundkörper 2 umschlossen sind. Die Anordnung der Zusatzmassen 5 außerhalb des Zentrums Z des Grundkörpers 2 und deren sich in Richtung des Zentrums Z erstreckende Verankerung mittels des Stützprofiles 9, bewirken die bereits in ihrer Wirkung beschriebenen Verformungen der Außenstege 8.

## Patentansprüche

1. Elastische Aufhängung (1), vorzugsweise für Abgasanlagen eines Kraftfahrzeuges, bestehend aus einem Grundkörper (2) aus elastischem Material, in den von dessen Zentrum (Z) ausgehend, zu Ober- und Unterseite (OS; US) hin versetzte Aufnahmeöffnungen (3; 4) für Elemente zur Verbindung mit der Karosserie bzw. Abgasanlage eingebracht sind und der Grundkörper (2) zwischen den Aufnahmeöffnungen (3;4) angeordnete Zusatzmassen (5) aufweist,
**gekennzeichnet durch folgende Merkmale:**
- der Grundkörper (2) weist eine, zwischen den Aufnahmeöffnungen (3; 4) angeordnete zentrale Ausnehmung (7) auf,
- Zusatzmassen (5) erstrecken sich außerhalb des Grundkörpers (2) längs dieser Ausnehmung (7) und sind über jeweils daran angeordnete Verankerungen (6) in den Außenseiten (8) beidseitig des Grundkörpers (2), etwa in Richtung des Zentrums Z der zentralen Ausnehmung (7) abgestützt.

2. Elastische Aufhängung (1), vorzugsweise für Abgasanlagen eines Kraftfahrzeuges, bestehend aus einem Grundkörper (2) aus elastischem Material, in den von dessen Zentrum (Z) ausgehend, zu Ober- und Unterseite (OS; US) hin versetzte Aufnahmeöffnungen (3; 4) für Elemente zur Verbindung mit der Karosserie bzw. Abgasanlage eingebracht sind und der Grundkörper (2) zwischen den Aufnahmeöffnungen (3; 4) angeordnete Zusatzmassen (5) aufweist,
**gekennzeichnet durch folgende Merkmale:**
- der Grundkörper (2) weist eine, zwischen den Aufnahmeöffnungen (3; 4) angeordnete zentrale Ausnehmung (7) auf,
- Zusatzmassen (5), deren Schwerpunkt jeweils außerhalb des Zentrums (Z) des Grundkörpers (2) liegt, sind in diesen eingeschlossen und über jeweils daran angeordnete Stützprofile (9) in den Außenseiten (8) des Grundkörpers (2), etwa in Richtung dessen Zentrums (Z), abgestützt.

3. Elastische Aufhängung nach Anspruch 1 0.2
**dadurch gekennzeichnet, daß**
die zentrale Ausnehmung (7) doppelt - T - förmig ausgeführt ist, wobei der Mittelsteg der Ausnehmung in etwa in der zwischen den Aufnahmeöffnungen (3; 4) liegenden Symmetrieachse des Grundkörpers liegt.
